# EUROPEAN PATENT APPLICATION

(11) **EP 2 632 204 A1**
(43) Date of publication of application: **28.08.2013**
(21) Application number: 12290065.7
(22) Date of filing: 27.02.2012
(51) Int. Cl.: H04W 48/12

(54) **A femtocell base station, a user terminal, a method of sending femtocell base station status information to a user terminal, and a method of receiving the same information**

(71) Applicant: Alcatel Lucent, 75007 Paris (FR)
(72) Inventor: Brend, Graham R., Bath BA1 7UE, Somerset (GB); Puddle, Nicola, Swindon, SN4 0ND, Wiltshire (GB)
(74) Representative: Sarup, David Alexander

(57) **Abstract**

A method is provided of sending femtocell base station status information to a user terminal, the method comprising automatically: determining that the femtocell base station has taken a given status, formulating a message including a text string describing that status; and sending the information message for display at the user terminal.

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as small cells, microcells, picocells, or femtocells, but we use the term femtocells generically for cells that are smaller than macrocells. One way to establish a femtocell is to provide a femtocell base station that operates within a relatively limited range within the coverage area of a macrocell. One example of use of a femtocell base station is to provide wireless communication coverage within a building.

The femtocell base station is of a relatively low transmit power and hence each femtocell is of a small coverage area compared to a macrocell. A typical coverage range is tens of metres.

Femtocell base stations have auto-configuring properties so as to support plug-and-play deployment by users, for example in which femto base stations may integrate themselves into an existing macrocell network so as to connect to the core network of the macrocell network.

Femtocell base stations are intended primarily for users belonging to a particular home or office. Femtocell base stations may be private access or public access. In femtocell base stations that are private access, access is restricted to only be allowed for registered users, for example family members or particular groups of employees. In femtocell base stations that arc public access, other users may also use the femtocell base station, in some cases subject to certain restrictions to protect the Quality of Service received by registered users.

One known type of Femtocell base station uses a broadband Internet Protocol connection as "backhaul", namely for connecting to the core network. One type of broadband Internet Protocol connection is a Digital Subscriber Line (DSL). The DSL connects a DSL transmitter-receiver ("transceiver") of the femtocell base station to the core network. The DSL allows voice calls and other services provided via the femtocell base station to be supported. The femtocell base station also includes a radio frequency (RF) transceiver connected to an antenna for radio communications. An alternative to such a wired broadband backhaul is to have a wireless backhaul.

Femtocell base stations are sometimes referred to as femtos.

Femtos are typically user-deployed, and often a user has to buy and deploy a femtocell themselves. A common reason why a user buys a femto is because that user suffers from a lack of macrocell coverage in the place where the femto is to be deployed. In consequence, this user has a strong interest in the service availability provided by the femto and may get irritated and confused when the femto fails to provide the service that they expect.

Due to this distributed deployment model, femto deployment may involve additional problems and errors as compared to a deployment of a macrocell base station, so a femto may be less reliable in use than if a macrocell base station were deployed there instead. This is especially so as the Mobile Network Operator is not usually directly responsible for managing the femto, and is also unlikely to be responsible for at least some other parts of the network, such as the backhaul, that the femtocell base station connects to.

Typical examples of problems that a femto may experience include issues with the backhaul, for example a lack of required bandwidth or capping of the usable bandwidth. Other problems may include the femtocell being incorrectly configured or positioned, access control violations, and user terminals being denied service due to the limit being reached of the number of users allowed to simultaneously access the femtocell. A number of these issues may prevent a user terminal from being able to establish a call or limit the type of call that the user terminal can make.

To indicate that there are such problems to a user, known femtocell base stations arc provided with Light Emitting Diodes (LEDs) on their outer housings. By being lit in certain combinations, various problems encountered by the femtocell base station are indicated by the LEDs.

### Summary

The inventors realised that most known femtocell base stations only include a small number of LEDs so only a limited number of problems can be indicated, being fewer than the number of different problems that the femtocell base station is likely to experience. The inventors also realised that this known approach also requires the user to go to the femto to visually inspect the LEDs. It also requires the user to work out, from which of the LEDs are lit, what problem is being indicated. This is not always intuitive. The inventors also realised that the LED combinations and their meanings are typically predefined for each type of femtocell base station, but each type of femtocell base station may be used in various networks having differing problems, to which the femto's LED combinations are not adapted. For example capped backhaul bandwidth may be a problem to fcmto performance in one network but not in another. It follows that the LED combinations may not always be suitable.

The inventors also realised that in some known connection rejection messages, for example of Radio Resource Control (RRC) type, a cause value is included but the range of cause values is limited and not informative without special knowledge. For example in 3GPP Technical Specification TS25.331 only two cause values are defined and these indicate respectively 'congested' and 'unspecified'. As this information is so limited, know approaches have tended to rely on LEDs to indicate errors, or status, as explained above.

The reader is now referred to the appended independent claims. Some preferred features are laid out in the dependent claims.

An example of the present invention is a method of sending femtocell base station status information to a user terminal, the method comprising automatically:
determining that the femtocell base station has taken a given status,
formulating a message including a text string describing that status; and
sending the information message for display at the user terminal.

Some preferred embodiments provide a method to convey femtocell base station error information to user terminals. Preferred embodiments provide the user with an easy to understand indication or explanation of why the femto is not providing its normal level of service.

Some preferred embodiments provide useful information to a user whose user terminal has attempted but failed to attach to the femtocell base station. Preferred embodiments provide this information in a rejection or release message. This information consists of a free format text string that the femto owner or network operator may define upon configuring the femto. In some preferred embodiments, a user terminal receiving this text string displays this text string so as to provide the user with good or useful information as to why the call was rejected etc.

In preferred embodiments, the information in the text string is readily modified, updated and tailored as required by particular network operators or femto owners. For example, the text string can reflect any special circumstances based on where the femto is deployed. For example, in certain deployments, the user's or femto owner's backhaul bandwidth may be capped due to excessive usage and hence for a time further calls will not succeed, and the user is informed of this in the text string. For example, in certain other deployments, excessive usage of the backhaul may result in additional charges, about which the user is informed by the text string. The user can then decide whether to continue making calls at that time.

Preferred embodiments are flexible and efficient since there is no need to change what LEDs may indicate nor alter existing standardised messages by attempting to add further cause values.

In some embodiments, the femto broadcasts status information to all user terminals within its coverage arca. A status text string is included in a System Information Block. The text string is free format text that may be set by the user or operator to describe the status of the femtocell base station.

Preferred embodiments provide useful and easy to understand information to an end user as to why they may be experiencing problems when attempting to make a call using the femtocell base station. Preferred embodiments provide a flexible method to provide this information directly to the user. The information may be tailored to match the specific requirements of a particular network or femto deployment.

### Brief_Description of the Drawings

Embodiments of the present invention will now be described by way of example and with reference to the drawings, in which:
Figure 1 is a diagram illustrating a wireless communications network according to a first embodiment of the present invention,
Figure 2 is a diagram illustrating an example femtocell, base station deployment within one macrocell shown in Figure 1,
Figure 3 is a diagram illustrating one of the femtos and the user terminal shown in Figure 2,
Figure 4 is a message sequence diagram illustrating communications between the femto and user terminal shown in Figure 3,
Figure 5 is an illustration of the Radio Resource Control (RRC) Reject message provided as part of the messaging shown in Figure 4,
Figure 6 is a diagram illustrating a femto and user terminal according to a second embodiment of the invention,
Figure 7 is a message sequence diagram illustrating communications between the femto and user terminal shown in Figure 6, and
Figure 8 is an illustration of the System Information Block (SIB) sent in a System Information Broadcast as part of the messaging provided as part of the messaging shown in Figure 7.

### Detailed Description

We first describe an example network including femtocell base stations then look at providing information about femto status to a user terminal.

### Network

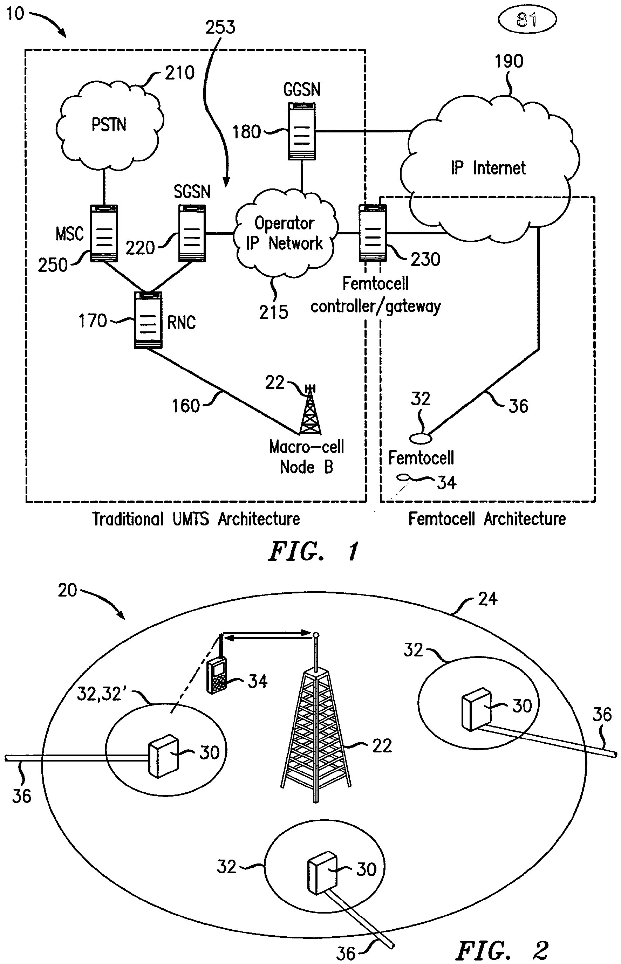

As shown in Figures 1 and 2, a network 10 for wireless communications, through which a user terminal 34 may roam, includes two types of base station, namely macrocell base stations and femtocell base stations (the latter being sometimes called "femtos"). One macrocell base station 22 is shown in Figures 1 and 2 for simplicity. Each macrocell base station has a radio coverage area 24 that is often referred to as a macrocell. The geographic extent of the macrocell 24 depends on the capabilities of the macrocell base station 22 and the surrounding geography.

Within the macrocell 24, each femtocell base station 30 provides wireless communications within a corresponding femtocell 32. A femtocell is a radio coverage area. The radio coverage area of the femtocell 32 is much less than that of the macrocell 24. For example, the femtocell 32 corresponds in size to a user's office or home.

As shown in Figure 1, the network 10 is managed by a radio network controller, RNC, 170. The radio network controller, RNC, 170 controls the operation, for example by communicating with macrocell base stations 22 via a backhaul communications link 160. The radio network controller 170 maintains a neighbour list which includes information about the geographical relationship between cells supported by base stations. In addition, the radio network controller 170 maintains location information which provides information on the location of the user equipment within the wireless communications system 10. The radio network controller 170 is operable to route traffic via circuit-switched and packet-switched networks. For circuit-switched traffic, a mobile switching centre 250 is provided with which the radio network controller 170 may communicate. The mobile switching centre 250 communicates with a circuit-switched network such as a public switched telephone network (PSTN) 210. For packet-switched traffic, the network controller 170 170 communicates with serving general packet radio service support nodes (SGSNs) 220 and a gateway general packet radio support node (GGSN) 180. The GGSN then communicates with a packet-switch core 190 such as, for example, the Internet.

The MSC 250, SGSN 220, GGSN 180 and operator IP network constitute a so-called core network 253. The SGSN 220 and GGSN 180 are connected by an operator IP network 21 5 to a femtocell controller/gateway 230.

The femtocell controller/gateway 230 is connected via the Internet 190 to the femtocell base stations 30. These connections to the femtocell controller/gateway 230 are broadband Internet Protocol connections ("backhaul") connections.

In Figure 2, three femtocell base stations 30 and corresponding femtocells 32 are shown for simplicity.

It is possible for a mobile terminal 34 within the macrocell 24 to communicate with the macrocell base station 22 in known manner. When the mobile terminal 34 enters into a femtocell 32 for which the mobile terminal is registered for communications within the femtocell base station 30, it is desirable to handover the connection with the mobile terminal from the macrocell to the femtocell. In the example shown in Figure 2, the user of mobile terminal 34 is a preferred user of the nearest 32' of the femtocells 32.

As shown in Figure 2, the femtocell base stations 30 are connected via the broadband Internet Protocol connections ("backhaul") 36 to the core network (not shown in Figure 2) and hence the rest of the telecommunications "world" (not shown in Figure 2). The "backhaul" connections 36, also known as Digital Subscriber Line (DSL) backhaul, allow communications between the femtocell base stations 30 through the core network (not shown). The macrocell base station is also connected to the core network (not shown in Figure 2).

### Providing information regarding status of the femto to the user terminal requesting connection

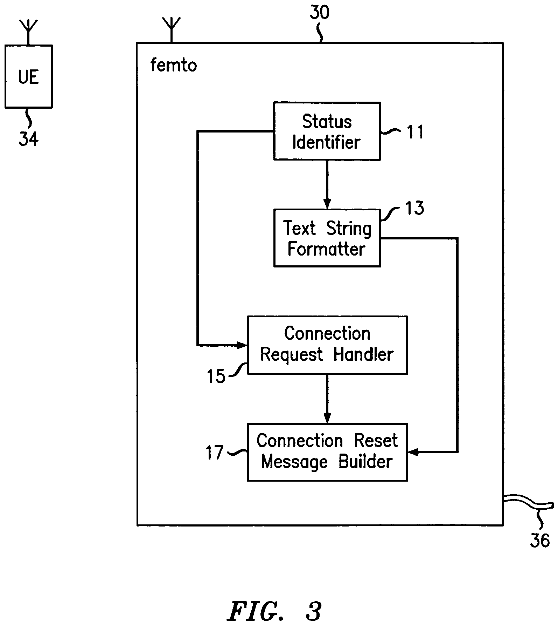

As shown in Figure 3, each base station 30 includes a femto status identifier 11 that is connected to a text string formatter 13. The status identifier 11 is also connected to a connection request handler 15. The text string formatter 13 and connection request handler 15 and both connected to a connection-request reject-message builder 17.

The status identifier 11 operates to track the current status of the femto and provide information as to the current status to the text string formatter 13. The text string formatter selects the text string associated with the received current status from a predetermined list. The predetermined list enables selection of a text string providing useful information about the femto. The predetermined list may be produced by a process of customisation by the femto owner or network operator, dependent upon how and where the femto is deployed.

As previously mentioned, the femto 30 includes a Digital Subscriber Line (DSL) backhaul 36. The backhaul 36 is shared with other devices such as personal computers and laptops in the same area. In this example scenario, due to heavy usage of the backhaul by those other devices, the femto cannot, at that time, support establishment of a voice call to a user terminal.

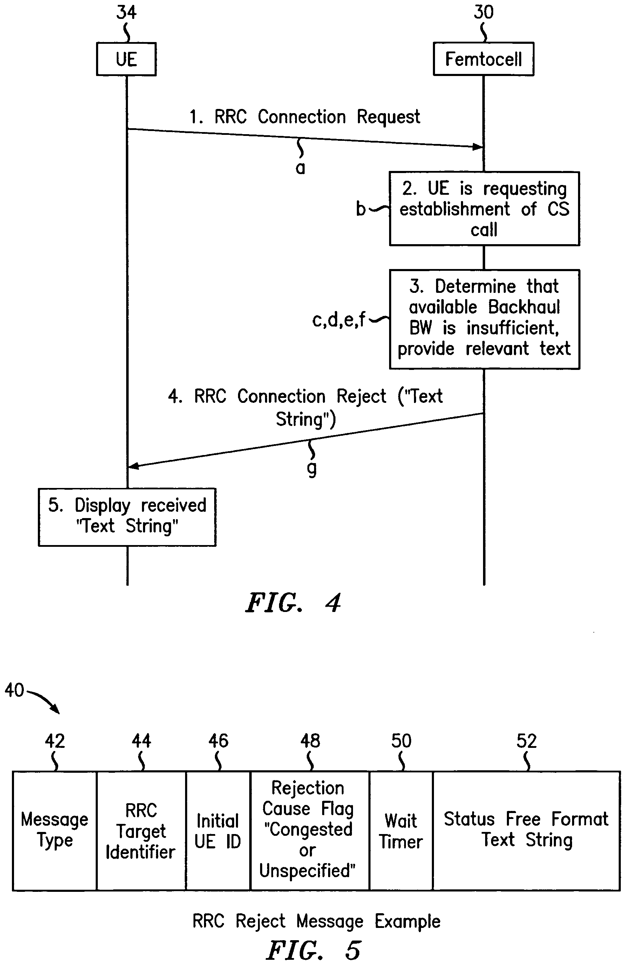

A process is undertaken as follows, described with reference to Figures 3 and 4.

As shown in Figure 4, the user terminal 34 requests a voice call set-up by sending (step a) a Radio Resource Control (RRC) connection request to the femto 30. The connection request handler 15 in the femto 30 inspects an establishment cause field in the received RRC connection request message to determine (step b) what type of service is being requested by the user terminal 34. In this example, the user terminal wishes to make a circuit-switched voice call.

The femto 30 determines (step c) that the amount of available backhaul bandwidth is insufficient to support the required call. Specifically the status identifier 11 provides (step d) information as to status to the connection reject handler 15 and text string formatter 13 indicating that the available backhaul bandwidth is insufficient to support the requested call. The text string formatter 13 provides (step e) the associated text string to the connection reject message builder 17 for sending back to the user terminal.

The connection reject message builder 17 of the femto 30 includes (step f) the text string in an RRC reject message, and the femto sends (step g) the RRC reject message to the user terminal 34.

The user terminal 34 recognises that the message includes a text string and so displays (step h) that text string for the user of the user terminal to see.

In this example the text string is "Insufficient bandwidth for a voice call".

In some other similar examples, the text string can indicate other problems; for example a problem with the backhaul, for example lack of required bandwidth, or for example that the allowed cap on bandwidth usage in a given period has been reached. Dependent upon its wording, the text string can indicate for example that the femto is incorrectly configured, that an access control violation has occurred, or that the limit on the number of users allowed to simultaneously access the femto has been reached.

In this example, the femto is a Universal Mobile Telecommunications System (UMTS) femto.

In some other similar examples the femto is a Long Term Evolution (LTE) femto.

As shown in Figure 5, the RRC reject message 40 includes a message type field 42, a Radio Resource Control (RRC) transaction identifier 44, an initial user terminal identifier 46, a rejection cause flag 48 indicating congested or unspecified, a wait timer 50 and a field for the free format text string 52 indicating the status of the femto, for example "Insufficient bandwidth for a voice call".

In some examples, the information in the text string is readily modified, updated and tailored as required by particular network operators or femto owners. For example, the text string may reflect any special circumstances based on where the femto is deployed. For example, in certain deployments the femto's backhaul bandwidth may be capped due to excessive usage and hence the user is informed for a time further calls will not succeed. For example, in certain other deployments, excessive usage of the backhaul may result in additional charges, about which the user is informed using the text string. The user can then make an informed decision as to whether to continue making calls at that time.

### Broadcasting femto status information to user terminals in the femtocells

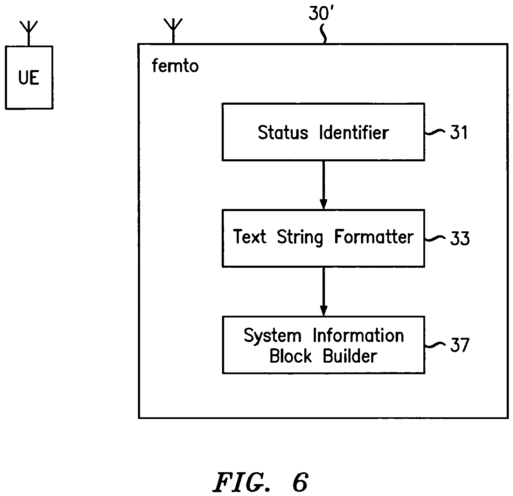

As shown in Figure 6, in a further example, the femto broadcasts status information to all user terminals that are within its coverage area. Specifically a status field is included in a System Information Block (SIB). This field is used to carry a free format text string giving the femto status information.

A system information broadcast consists of multiple system information blocks, and is broadcast by the femto so as to be received by any user terminal within the femto's coverage area. The system information broadcast identifies the femto and indicates how the fcmto may be accessed by a user terminal.

In this Universal Mobile Telecommunications System (UMTS) example, a system information broadcast includes at least twenty System Information Blocks (SIB), and the twentieth SIB, denoted SIB20 is used to carry the text string.

In each user terminal receiving and decoding the SIB20, the text string is extracted and displayed for the user of the user terminal to see.

This approach may be particularly useful when a user terminal cannot even attempt to connect to the femto due to some fundamental reason, for example the femto is fully loaded by other user terminals or no backhaul bandwidth is available. Of course, in this approach multiple user terminals in the coverage area are communicated to simultaneously by the femto.

As shown in Figure 6, in this example the femto 30' includes a status identifier 31 connected to a text string formatter 33 which is connected to a System Information Block builder 35.

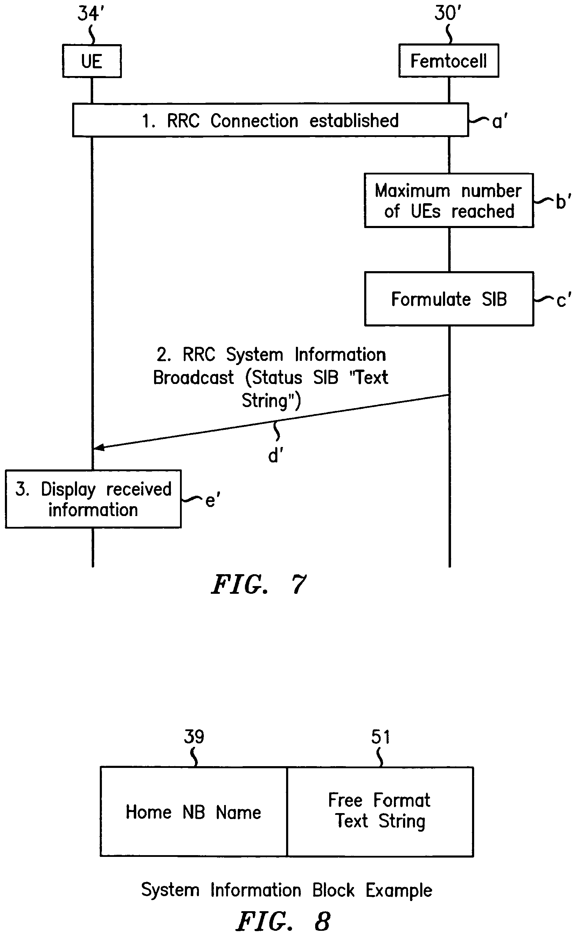

As shown in Figure 7, in this example scenario, a first user terminal 34' successfully establishes (step a') a Radio Resource Control (RRC) connection with the femto 30' such that (step b') the maximum number of user terminals that can be connected simultaneously to the femto is reached. Should a further user terminal attempt to establish an active connection to the rest of the core network via the femto, the attempt will fail.

In the femto 30' the SIB is formulated (step c') for broadcast. Specifically, the status identifier 33 tracks the femto's status by keeping a record of current status. Upon the status changing, the status identifier 31 provides information as to that status to the text string formatter 35 which selects an appropriate text string from a predetermined list, in this example. The text string is provided to the SIB builder 37 which generates the SIB including the text string.

The SIB is then broadcast (step d') to all user terminals in the radio coverage area of the femto 30'.

At each user terminal receiving the SIB, the text string is extracted and displayed (step e') for the respective user of each user terminal to see.

In this example, the displayed text string states that the maximum number of user terminals that can be simultaneously connected to has been reached. For example the text string may be "Maximum number of UEs connected" thereby giving a clear indication to the user of why he cannot current establish a call themselves.

An example of the SIB is shown in Figure 8 consisting of a Home NodeB Name 39 (in other words a femto identifier) and the text string 41.

In another example, that is basically similar but is in line with Long Term Evolution (LTE), SIB9 is used to send the text string in respect of the femto status.

### General

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of sending femtocell base station status information to a user terminal, the method comprising automatically:
determining that the femtocell base station has taken a given status,
formulating a message including a text string describing that status; and
sending the information message for display at the user terminal.

2. A method according to claim 1, in which the message is addressed to a specific user terminal.

3. A method according to claim 2, in which the message is a connection request reject message including the text string.

4. A method according to claim 1, in which the message is broadcast to be received by all user terminals in the femtocell base station's coverage area.

5. A method according to claim 4, in which the message is a System Information broadcast comprising a system information block, SIB.

6. A method according to clam 5, in which the system information block comprises an identifier of the femtocell base station and the text string.

7. A method according to any preceding claim, in which the message is a Radio Resource Control, RRC, message.

8. A method according to any preceding claim, in which the given status is that a resource of the femtocell base station is insufficient to support a requested call connection.

9. A method of a user terminal receiving and displaying an automatically generated text string, in which the text string describes a given status of a femtocell base station and was generated by the femtocell base station for transmission.

10. A femtocell base station,
the femtocell base station comprising an identifier of a given status of the femtocell, a generator of a message for transmission including a text string describing the status, and a transmitter configured to transmit the message.

11. A femtocell base station according to claim 10, in which the generator comprises a connection request handler and a message builder, the message being a connection request reject message.

12. A femtocell base station according to claim 10, in which the generator comprises a system information block, SIB, builder; the system information block including the text string.

13. A user terminal comprising a receiver and a display, the receiver being configured to receive a message comprising an automatically generated text string, in which the text string describes a given status of a femtocell base station and was generated by the femtocell base station for transmission, and the display being configured to display the text string.

## Amended claims

### Amended claims in accordance with Rule 137(2) EPC.

**1.** A method of sending status information (52) to a user terminal (34), the method comprising a femtocell base station automatically:
determining the status,
formulating a message (40) including a text string describing that status,
sending the message for display at the user terminal;
**characterised in that**
the status information is femtocell base station status information;
determining the status comprises determining that the femtocell base station has taken a given status, and
sending the message comprises broadcasting (d') the message to be received by all user terminals in the femtocell base station's coverage area.

**2.** A method according to claim 1, in which the message is a System Information broadcast comprising a system information block, SIB (39, 51).

**3.** A method according to clam 2, in which the system information block comprises an identifier (39) of the femtocell base station and the text string (51).

**4.** A method according to any preceding claim, in which the message is a Radio Resource Control, RRC, message.

**5.** A method according to any preceding claim, in which the given status is that a resource of the femtocell base station is insufficient to support a voice call.

**6.** A femtocell base station (30'),
an identifier (31) of a given status,
a generator (33, 37) of a message for transmission including a text string describing the status,
a transmitter configured to transmit the message,
**characterised in that**
the identifier identifies the given status of the femtocell base station, and
the transmitter transmits by broadcasting (d') the message to be received by all user terminals in the femtocell base station's coverage area.

**7.** A femtocell base station according to claim 6, in which the generator comprises a system information block, SIB, builder; the system information block including the text string.
